Europäisches Patentamt

European Patent Office

Office européen des brevets

(11) Veröffentlichungsnummer: **0 238 049**
**B1**

(12) **EUROPÄISCHE PATENTSCHRIFT**

(45) Veröffentlichungstag der Patentschrift:
20.06.90

(51) Int. Cl.⁵: **B27K 3/52**

(21) Anmeldenummer: 87103894.9

(22) Anmeldetag: 17.03.87

(54) Holzschutzmittel.

(30) Priorität: 21.03.86 DE 3609544

(43) Veröffentlichungstag der Anmeldung:
23.09.87 Patentblatt 87/39

(45) Bekanntmachung des Hinweises auf die Patenterteilung:
20.06.90 Patentblatt 90/25

(84) Benannte Vertragsstaaten:
AT BE CH DE ES FR GB GR IT LI NL SE

(56) Entgegenhaltungen:
WO-A-82/03817
WO-A-85/04668
DE-A- 2 000 320
DE-A- 3 032 463
DE-B- 1 077 476
US-A- 2 149 284
US-A- 3 945 834

(73) Patentinhaber: Dr. Wolman GmbH,
Dr.-Wolman-Strasse 31-33, D-7573 Sinzheim(DE)

(72) Erfinder: Marx, Hans-Norbert, Mozartweg 8,
D-7580 Buehl-Weitenung(DE)
Erfinder: Goettsche, Reimer, Waldstrasse 27,
D-7570 Baden-Baden 19(DE)
Erfinder: Hettler, Wendelin, Panoramastrasse 9,
D-7573 Sinzheim-Muellhofen(DE)

(74) Vertreter: Schweiss, Werner, Dr. et al, BASF
Aktiengesellschaft Patentabteilung
Carl-Bosch-Strasse 38, D-6700 Ludwigshafen(DE)

ACTORUM AG

**Beschreibung**

Die vorliegende Erfindung betrifft ein Holzschutzmittel in Form einer wäßrigen Lösung einer Kupfer-II-Verbindung, die im Holz in eine Kupfer-I-Verbindung übergeht.

Holzschutzmittel auf Basis anorganischer Kupferverbindungen mit Alkanolaminen als Komplexbildner sind bekannt (EP-89 958). Sie besitzen den Nachteil, daß nach Fixierung im Holz eine Kupferauswaschung von ca. 10 % auftritt. Die Kupferfixierung obengenannter Holzschutzmittel mit einem pH-Wert der Lösungen über 8 erfolgt im Holz ab pH ca. 7,5 bis 8,0. Es bilden sich hierbei basische Verbindungen, z.B. Kupferhydroxid. Diese Kupferverbindungen sind bis zu einem pH-Wert von ca. 5,0 unlöslich, können dann aber durch verdünnte Säuren, wie sie in sauren Böden oder saurem Regen vorliegen, wieder gelöst werden, so daß sich unter diesen Bedingungen die Auswaschung aus dem Holz erhöht.

Die Verwendung anderer Komplexbildner für das Kupfer wie Polyamine, z.B. Dipropylentriamin, hat den Nachteil, daß die Cu-Auswaschung 40 % und mehr betragen kann. Das gleiche gilt für die Verwendung von Hydroxycarbonsäuren im pH-Bereich über 6, z.B. Weinsäure. Die Auswaschung erhöht sich dadurch zum Teil auf über 50 %.

Wird Holz mit dem obengenannten Mittel, d.h. mit durch Amine oder Ammoniak komplexierten Kupferverbindungen imprägniert, so besitzt das Holz nach der Imprägnierung eine grünliche Farbe, die bei dekorativen, transparenten nachträglichen Anstrichen zu Farbbeeinflussungen führen kann.

Es wurde jetzt gefunden, daß die obengenannten Nachteile entfallen, wenn Kupfer-II-Verbindungen durch Amine oder organische Hydroxycarbonsäuren oder ihre Mischungen in wäßriger Lösung im Bereich oberhalb pH 6 komplexiert werden und die Lösung 5 bis 30 Gew.-% Thiocyanat oder Jodid oder eine Mischung dieser Verbindungen enthält, so daß im Holz durch Reduktion in schwer lösliche, stabile, schwer auslaugbare und witterungsbeständige Kupfer-I-Verbindungen, insbesondere Kupfer-I-Oxid, Kupfer-I-Thiocyanat oder Kupfer-I-Jodid entstehen.

Es werden beispielsweise wasserlösliche Thiocyanate oder Jodide, z.B. Alkali-, Amino- oder Ammoniumthiocyanat oder die entsprechenden Jodide oder eine Mischung der Verbindungen zugegeben. Nach der Imprägnierung des Holzes mit den neuen Mitteln wird in Anwesenheit der Thiocyanate oder Jodide die Kupfer-II-Verbindung durch Holzinhaltsstoffe oder gegebenenfalls zugesetzte Reduktionsmittel, insbesondere Glucose, allmählich reduziert, und es bildet sich Kupfer-I-Thiocyanat bzw. -Jodid. Man sieht es an der Farbe der Holzklötzchen, die während des Fixiervorganges allmählich ihre bläulichgrüne Farbe verlieren und am Ende praktisch keine Verfärbung mehr aufweisen. Dieser Vorgang kann durch Energiezufuhr, z.B. Heißdampf, erheblich beschleunigt werden. Die Klötzchen verlieren ihre Anfärbung oder verfärben sich allmählich braungelb. Das "Braungelb" ist ein Hinweis auf die Anwesenheit von rotem Kupfer-I-Oxid im Holz. Es entsteht vor allem bei Unterschuß an Thiocyanat, in Anwesenheit von zusätzlichem Reduktionsmittel, wie z.B. Glucose. Die obengenannte Reduktion von Kupfer-II zu Kupfer-I geht einher mit einer erheblich verminderten Kupfer-Auswaschung aus dem Holz bei der Einwirkung von Wasser auf das imprägnierte Holz.

Es ist empfehlenswert, die Menge des zugesetzten Thiocyanats oder Jodids so zu bemessen, daß die Umsetzung zu den Kupfer-I-Verbindungen stöchiometrisch erfolgen kann. Es kann aber auch ein Überschuß oder Unterschuß (z.B. bis 10 %) gegenüber der stöchiometrischen Menge verwendet werden. Bei nachfolgender Schnellfixierung, z.B. durch Heißdampf, ist die Verwendung einer stöchiometrischen Menge an Thiocyanat oder Jodid nicht erforderlich, z.B. bei einem Unterschuß an Thiocyanat bis etwa 50 % gegenüber dem stöchiometrischen Verhältnis wurde die Kupfer-Auswaschung praktisch nicht erhöht. Dies gilt insbesondere dann, wenn zusätzliche Reduktionsmittel, wie z.B. Glucose der Imprägnierlösung zugesetzt werden. Neben dem entstandenen Kupfer-I-Thiocyanat wird das restliche Kupfer zu Kupfer-I-oxid reduziert.

Die zugesetzte Menge an Thiocyanat oder Jodid beträgt 5 bis 30%, z.B. 10 bis 30%, insbesondere 14 bis 28%.

Es können wasserlösliche oder unlösliche organische bzw. anorganische Kupfer-II-Verbindungen für die Holzschutzmittel verwendet werden, die je nach verwendetem Komplexbildner im pH-Bereich von 6 bis 11 im Wasser gelöst werden.

Hierbei wird die Menge der verwendeten bekannten Komplexbildner so bemessen, daß sie zur Komplexbildung ausreicht (1 g Atom Kupfer benötigt z.B. i.a. 4 mol Äquivalente Amin) und sie gegebenenfalls auch den pH-Wert der Imprägnierlösung einstellt.

Es können auch Mischungen von Aminen und Hydroxycarbonsäuren und/oder ihren Salzen zur Komplexierung verwendet werden. Als Hydroxycarbonsäuren eignen sich z.B. Milchsäure, Weinsäure, Zitronensäure, Apfelsäure; als Amine sind geeignet z.B. Alkanolamine, z.B. Ethanolamin, Isopropanolamin, 1,1-, 1,2-Diaminoethanol, Aminoethylethanolamin, Diethanolamin, Dimethylethanolamin oder Polyamine, z.B. Dipropylentriamin, oder Alkylamine, z.B. Triethylamin oder Mischungen der verschiedenen Amine.

Der pH-Wert der Holzschutzmittel und der Imprägnierlösungen kann gegebenenfalls unabhängig von der Komplexbildung durch Zusatz von Alkalien, Ammoniak oder wasserlöslichen Aminen eingestellt werden.

Geeignete Konzentrate enthalten beispielsweise (jeweils Gewichtsprozent)

5 bis 50 % Cu-II-Verbindungen

15 bis 50 % Komplexbildner
5 bis 30 % Thiocyanat oder Jodid oder deren Mischung
0 bis 30 % Verbindung mit einem fungizid wirkenden Anion,
0 bis 30 % Reduktionsmittel, z.B. Glucose,
wobei die Summe jeweils 100 (Gew.-%) ergibt sowie gegebenenfalls Wasser. Die Erfindung erstreckt sich jedoch gleichermaßen auch auf die durch Verdünnung mit Wasser herstellbaren Imprägnierlösungen entsprechend geringerer Einzelkonzentration.

Die erfindungsgemäßen Holzschutzmittel können gegebenenfalls übliche zusätzliche Bestandteile wie Korrosionsinhibitoren, z.B. Isononansäure bzw. deren Salze enthalten.

Es empfiehlt sich, Verbindungen mit fungizid wirkendem Anion z.B. Borsäure, Borate, Fluoride oder Fluoroborate oder deren Mischung zuzusetzen, um durch diese diffusionsfähigen Bestandteile auch eine Imprägnierung nicht zugänglicher Holzbereiche (Kernholz) zu erfassen.

Die erfindungsgemäßen Konzentrate können als mehr oder weniger viskose Flüssigkeit, als Paste oder in fester Form vorliegen.

Zur beschleunigten Fixierung kann die Zuführung der notwendigen Energie neben der Verwendung von Heißdampf, z.B. auch dadurch erfolgen, daß das imprägnierte Holz einem Hochfrequenzfeld ausgesetzt wird.

Die Erfindung wird an dem folgenden Beispiel erläutert:

Versuchsdurchführung:

Hierzu wurden jeweils 20 Kiefernsplintholznormklötzchen (5 × 15 × 50 mm) mit der wäßrigen Lösung der erfindungsgemäßen Mittel imprägniert. 10 Klötzchen wurden zur Fixierung in Glasbehältern gelagert und nach 4 Wochen mit Wasser ausgewaschen. Die anderen 10 Klötzchen wurden 2 Stunden nach der Imprägnierung mit Heißdampf von 100°C behandelt, bis die Klötzchen eine Temperatur von mindestens 90°C erreichten (Dauer 2 Stunden). Die so behandelten Klötzchen wurden danach sofort mit Wasser ausgewaschen.

Die Eluate der Auswaschungen wurden getrennt gesammelt und anschließend darin die Kupfermenge bestimmt. Die ausgewaschene Menge Cu im Verhältnis zum Cu-Gehalt der Klötzchen wurde jeweils errechnet. Prozentangaben in Gewichtsprozent.

Beispiel 1

|  | a – ohne Zusatz | b – mit Rhodanid | c – mit Jodid |
|---|---|---|---|
| $Cu(OH)_2CuCO_3$ | 12,10% | 12,10% | 12,10% |
| Weinsäure | 33,00% | 33,00% | 33,00% |
| NaOH | 19,20% | 19,20% | 19,20% |
| Wasser | 35,70% | 19,00% | 19,00% |
| KSCN | – | 16,70% | – |
| KJ | – | – | 16,70% |

60 g der Lösung wurden in 1 Liter Wasser gelöst, d. h. die Anwendungskonzentration betrug 6%.

|  | Auswaschung von Cu | | |
|---|---|---|---|
| Normalfixierung (4 Wochen Lagerung) | 60,50% | 1,50% | 17,50% |
| Schnellfixierung (mit Heißdampf) Anteil Kondensat*) | 20,20% | 18,50% | 16,50% |
|  | 51,20% | 0,30% | 15,50% |

*) Am Anfang einer Heißdampfbehandlung während der Aufheizperiode – bei noch nicht abgeschlossener Fixierung – kann das sich bildende Kondensat aus den Klötzchen einen Teil der Schutzmittelmenge auswaschen. Dieser Anteil wurde nicht als Auswaschung gerechnet.
Die Auswaschung durch Kondensatbildung ist durch das Verhältnis Oberfläche/Volumen der Klötzchen und zusätzlich durch das geringe Volumen der Klötzchen höher als bei Rund- oder Schnittholz, bei dem die oberflächliche Auswaschung durch Kondensatbildung im Verhältnis Rundholz zu Klötzchen wie 1:3 bis 1:5 geringer ist.

Beispiel 2

|  | ohne Zusatz | mit Thiocyanat | |
|---|---|---|---|
| $Cu(OH)_2CuCO_3$ | 14,50% | 14,50% | 14,50% |
| Weinsäure | 14,50% | 14,50% | 14,50% |
| Monoethanolamin | 30,50% | 30,50% | 30,50% |
| Borsäure $H_3BO_3$ | 4,00% | 4,00% | 4,00% |
| KSCN | – | 27,50% | – |
| $NH_4SCN$ | – | – | 27,50% |
| Wasser | 36,50% | 9,00% | 9,00% |
| Anwendungskonzentration: 5% | | | |
|  | Auswaschung | | |
| Normalfixierung | 28,10% | 2,20% | 2,00% |
| Schnellfixierung | 15,70% | 13,60% | 7,00% |
| Anteil Kondensat | | | |
|  | 20,10% | 0,50% | 0,30% |

Beispiel 3

|  | ohne Zusatz | mit Thiocyanat |
|---|---|---|
| $Cu(OH)_2CuCO_3$ | 15,00% | 15,00% |
| Milchsäure | 15,00% | 15,00% |
| Borsäure $H_3BO_3$ | 4,00% | 4,00% |
| Monoethanolamin | 31,00% | 31,00% |
| $NH_4SCN$ | – | 15,00% |
| Wasser | 35,00% | 20,00% |
| Anwendungskonzentration: 5% | | |
|  | Auswaschung | |
| Normalfixierung | 11,10% | 2,80% |
| Schnellfixierung | 13,80% | 9,50% |
| Anteil Kondensat | | |
|  | 8,10% | 0,60% |

4

Beispiel 4

|  | ohne Zusatz | mit Thiocyanat | mit Jodid |
|---|---|---|---|
| $Cu(OH)_2CuCO_3$ | 20,00% | 20,00% | 20,00% |
| Monoethanolamin | 40,00% | 40,00% | 40,00% |
| Borsäure $H_3BO_3$ | 5,00% | 5,00% | 5,00% |
| $NH_4SCN$ | – | 20,00% | – |
| KJ | – | – | 20,00% |
| Wasser | 35,00% | 15,00% | 15,00% |
| Anwendungskonzentration: 4% | | | |
|  | Auswaschung | | |
| Normalfixierung | 9,10% | 1,60% | 2,30% |
| Schnellfixierung | 8,50% | 6,20% | 9,50% |
| Anteil Kondensat | | | |
|  | 8,90% | 0,50% | 1,20% |

Beispiel 5

|  | ohne Zusatz | mit Thiocyanat |
|---|---|---|
| $Cu(OH)_2CuCO_3$ | 15,00% | 15,00% |
| Dipropylentriamin | 28,00% | 28,00% |
| Oxalsäure | 17,50% | 17,50% |
| Borsäure $H_3BO_3$ | 4,00% | 4,00% |
| $NH_4SCN$ | – | 15,00% |
| Wasser | 35,00% | 20,50% |
| Anwendungskonzentration: 5% | | |
|  | Auswaschung | |
| Normalfixierung | 45,70% | 12,50% |
| Schnellfixierung | 15,20% | 17,50% |
| Anteil Kondensat | | |
|  | 41,00% | 8,90% |

Beispiel 6

| 15% | $Cu(OH)_2.CuCO_3$ |
|---|---|
| 30% | Monoethanolamin |
| 5% | $H_3BO_3$ |
| 20% | D-Glucose |
| 7,5% | $NH_4SCN$ |
| Anwendungskonzentration: 5% | |
|  | Auswaschung |
| Schnellfixierung | 8,9% |
| Anteil Kondensat | 0,7% |

**Patentansprüche**

1. Holzschutzmittel auf der Basis einer Kupfer-II-Verbindung in Form eines Komplexes mit einem Amin oder einer organischen Hydroxycarbonsäure oder einer Mischung dieser Verbindungen, das bei einem pH-Wert über 6 in Wasser löslich ist, dadurch gekennzeichnet, daß das Holzschutzmittel 5 bis 30 Gew.-% Thiocyanat oder Jodid oder einer Mischung dieser Verbindungen enthält.

2. Verfahren zum Schutz von Holz durch Imprägnierung mit einem Mittel gemäß Anspruch 1, dadurch gekennzeichnet, daß dem Holz während oder nach der Imprägnierung Energie zugeführt wird.

3. Verfahren gemäß Anspruch 2, dadurch gekennzeichnet, daß die Energie dem Holz in Form von Heißdampf zugeführt wird.

4. Holzschutzmittel nach Anspruch 1, dadurch gekennzeichnet, daß es zusätzlich ein Reduktionsmittel enthält.

## Claims

1. A wood preservative based on a copper (II) compound in the form of a complex with an amine or an organic hydroxycarboxylic acid or a mixture of these compounds, which is soluble in water at a pH above 6, wherein the preservative contains from 5 to 30% by weight of a thiocyanate or an iodide or a mixture of these compounds.

2. A method of preserving wood by impregnation with a wood preservative as claimed in claim 1, wherein energy is supplied to the wood during or after impregnation.

3. A method as claimed in claim 2, wherein the energy is supplied to the wood in the form of superheated steam.

4. A wood preservative as claimed in claim 1, which additionally contains a reducing agent.

## Revendications

1. Agent de protection du bois, à base d'un composé du cuivre-II à l'état de complexe avec une amine ou un acide organique hydroxycarboxylique ou un mélange de ces composés, soluble dans l'eau à un pH supérieur à 6, caractérisé par le fait que l'agent de protection du bois contient de 5 à 30% en poids de thiocyanate ou d'iodure ou d'un mélange de ces composés.

2. Procédé pour protéger le bois par imprégnation à l'aide d'un agent selon la revendication 1, caractérisé par le fait que, durant ou après l'imprégnation, on apporte au bois de l'énergie.

3. Procédé selon la revendication 2, caractérisé par le fait que l'énergie est apportée au bois sous forme de vapeur d'eau chaude.

4. Agent de protection du bois selon la revendication 1, caractérisé par le fait qu'il contient en outre un agent réducteur.